# EUROPÄISCHE PATENTANMELDUNG

(11) **EP 2 061 002 A1**
(43) Veröffentlichungstag der Anmeldung: **20.05.2009**
(21) Anmeldenummer: 07120786.4
(22) Anmeldetag: 15.11.2007
(51) Int. Cl.: G06Q 30/00

(54) **Computerimplementiertes Verfahren zur Generierung und Übermittlung von Gegenstands- und/oder Dienstleistungslieferungsaufträgen, sowie das entsprechende System und die entsprechende Vorrichtung**

(71) Anmelder: Swisscom AG, 3050 Bern (CH)
(72) Erfinder: Jegerlehner, Roger, 3012, Bern (CH); Mackwood, Julie, 3044 Innerberg-Säriswil (CH); Rossetti, Gian, 4500, Solothurn (CH)
(74) Vertreter: BOVARD AG

(57) **Zusammenfassung**

Die vorliegende Erfindung betrifft ein computerimplementiertes Verfahren zur Generierung und Übermittlung von Gegenstands- und/oder Dienstleistungslieferungsaufträgen, wobei mindestens ein Gegenstand im Auftrag von einem ersten Benutzer (20₁, 20₂, ..., 20ₙ) an mindestens einen zweiten Benutzer (20₁, 202, ..., 20ₙ) geliefert wird, in welchem eine virtuelle Umgebung (10) zur Verfügung gestellt wird, wobei dem ersten Benutzer (20₁, 20₂, ..., 20ₙ) ein erster Avatar (11, 12, 13) und dem zweiten Benutzer (20₁, 20₂, ..., 20ₙ) ein zweiter Avatar (11, 12, 13) zugeordnet wird, wobei mittels des ersten Avatars (11, 12, 13) mindestens ein virtueller Gegenstand (17, 18) gewählt wird und an den zweiten Avatar (11, 12, 13) übertragen wird, wobei mittels eines Benachrichtigungsmoduls (34) eine Empfangsmitteilung generiert und dem zweiten Benutzer (20₁, 20₂, ..., 20ₙ) gesendet wird, wobei die Generierung und Übermittlung des Gegenstands- und/oder Dienstleistungslieferungsauftrags durch den zweiten Benutzer (20₁, 20₂, ..., 20ₙ) akzeptiert wird, wobei die Lieferungsdaten des zweiten Benutzers (20₁, 20₂, ..., 20ₙ) an ein Auftragserfassungsmodul (34) gesendet werden, und wobei mittels des Auftragserfassungsmoduls (34) ein Gegenstands- und/oder Dienstleistungslieferungsauftrag generiert und an mindestens einen Lieferungsdienstanbieter (40₁, 40₂, ..., 40ₙ) übermittelt wird.

## Beschreibung

Diese Erfindung betrifft ein computerimplementiertes Verfahren zur Generierung und Übermittlung von Gegenstands- und/oder Dienstleistungslieferungsaufträgen, wobei mindestens ein Gegenstand im Auftrag von einem ersten Benutzer an mindestens einen zweiten Benutzer geliefert wird. Zudem betrifft diese Erfindung ein System und eine Vorrichtung zur Realisierung des erfindungsgemässen computerimplementierten Verfahrens.

### Stand der Technik

Es sind bereits viele computerimplementierte Verfahren bekannt, mittels welchen Gegenstands- und/oder Dienstleistungslieferungsauftrage generiert und an einen oder mehrere Lieferungsdienstanbieter übermittelt werden können. So gibt es beispielsweise bereits sehr viele Webseiten, auf welchen Gegenstände in einem ersten Schritt ausgewählt und in einem zweiten Schritt an eine beliebige Adresse versendet werden können. Auch können auf ähnliche Weise Dienstleistungen im Internet bestellt werden, welche anschliessend an der angegebenen Adresse durchgeführt werden. Dabei spielt es grundsätzlich keine Rolle, ob die Gegenstände bzw. Dienstleistungen an den Sender selbst oder an eine andere Person gesendet werden. Allerdings muss der Sender die Lieferungsadresse des Empfängers auf jeden Fall kennen und eingeben, bevor der Gegenstands- und/oder Dienstleistungslieferungsauftrag generiert und an den Lieferungsdienstanbieter übertragen werden kann.

Es ist klar, dass dieses Verfahren viele bedeutende Nachteile aufweist, da die Lieferung davon abhängig ist, ob der Sender die korrekte Lieferungsadresse des Empfängers auch tatsächlich kennt. In diesem Zusammenhang ist es zum Beispiel nicht möglich, einen Gegenstands- bzw. Dienstleistungslieferungsauftrag auszulösen, falls der Sender den Empfänger nur vage oder gar nicht kennt. Ausserdem kann der Empfänger, falls seine Adresse dem Sender doch bekannt sein sollte, generell gar nicht entscheiden, ob er die Lieferung überhaupt erhalten möchte, was unter Umständen auch einen wesentlichen Nachteil darstellen kann (man denke beispielsweise an den so oft kritisierten unerwünschten Versand von Werbegegenständen oder -unterlagen).

Andere bekannte computerimplementierte Verfahren zur Erfassung und Übermittlung von Gegenstands- und/oder Dienstleistungslieferungsaufträgen vereinfachen die oben genannten Verfahren, indem sich alle Benutzer eines Systems jeweils bei der ersten Benutzung registrieren und dabei ihre Adressen beim Betreiber des Systems hinterlegen müssen. Diese Adressen werden dann üblicherweise in einer Zentraleinheit (welche tatsächlich aber auch ein verteiltes System sein kann) gespeichert und aufbewahrt. In einem solchen Fall kann ein Gegenstand bzw. eine Dienstleistung vom Sender ausgewählt und an den Empfänger gesendet werden, auch ohne dass dem Sender die genaue Lieferungsadresse des Empfängers bekannt wäre. Es ist die Aufgabe des Systems, die gespeicherte Lieferungsadresse aus der Zentraleinheit zu holen, und anschliessend einen entsprechenden Gegenstands- und/oder Dienstleistungslieferungsauftrag zu generieren und an den Lieferungsdienstleistungsanbieter zu übermitteln.

Aber auch dieses Verfahren weist einen entscheidenden Nachteil auf, nämlich die Tatsache, dass sehr viele Benutzer solcher Systeme sehr viel Wert auf die Wahrung der Privatsphäre legen, und sich äusserst zögernd verhalten, wenn ihre persönlichen Daten (darunter insbesondere auch die Adresse) preisgegeben werden sollen. So verzichten auch sehr viele potentielle Benutzer aus diesem Grund gar vollständig auf die Verwendung solcher Systeme. Und tatsächlich ist es so, dass die gespeicherten Daten aufgrund von Hacking-Überfällen oder wegen gewisser technischen Störungen trotz vorhandenen Sicherheitsmassnahmen in gewissen Fällen auch an Unbefugte übermittelt werden könnten.

Diese bekannten computerimplementierten Verfahren sind ausserdem vor allem dann nachteilig, wenn beispielsweise Geschenke von einem ersten Benutzer eines Systems an einen zweiten Benutzer des Systems gesendet werden sollen, wenn sich aber die beiden Benutzer lediglich aus virtuellen Umgebungen und nicht auch in der realen Welt kennen. Virtuelle Umgebungen wie zum Beispiel "Second Life ®" (auch kurz "SL" genannt) sind bekannt schon seit einiger Zeit und gewinnen auch aktuell immer mehr an Popularität. Second Life beispielsweise ist eine virtuelle 3D-Umgebung, welche im Wesentlichen von den einzelnen Benutzern gestaltet werden kann, in welcher die Menschen (bzw. ihre virtuellen Gegenstücke - auch Avatare genannt) interagieren, spielen, Handel betreiben und anderweitig Informationen austauschen können. Das Internet wird dabei als die Kommunikationsplattform eingesetzt, so dass sich in Second Life und anderen ähnlichen virtuellen Umgebungen grundsätzlich Menschen aus der ganzen Welt treffen und miteinander kommunizieren können.

In solchen virtuellen Umgebungen ist es für Benutzer grundsätzlich unmöglich, die realen Benutzer des Systems, welche hinten den virtuellen Persönlichkeiten stehen, ohne ihren ausdrücklichen Wunsch kennen zu lernen. In diesem Zusammenhang ist es deshalb unter anderem auch nicht möglich, Gegenstände wie Geschenke und andere Produkte (aber auch Dienstleistungen) an diese realen Personen zu übermitteln.

### Offenbarung der Erfindung

Es ist daher eine Aufgabe der vorliegenden Erfindung, ein neues Verfahren, ein neues System und eine neue Vorrichtung zur Generierung und Übermittlung von Gegenstands- und/oder Dienstleistungslieferungsauftragen vorzuschlagen, welche keine der Nachteile des Standes der Technik aufweisen. Insbesondere ist die Aufgabe der vorliegenden Erfindung, ein neues Verfahren, ein neues System und eine neue Vorrichtung zur Generierung und Übermittlung von Gegenstands- und/oder Dienstleistungslieferungsauftragen zur Verfügung zu stellen, welche es erlauben, Geschenke an reale Benutzern einer virtuellen Umgebung zu senden, ohne dass die entsprechenden Lieferungsadressen bekannt wären, und ohne dass diese Lieferungen vom Empfänger gar nicht gewünscht wären.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass bei einem computerimplementierten Verfahren zur Generierung und Übermittlung von Gegenstands- und/oder Dienstleistungslieferungsaufträgen, wobei mindestens ein Gegenstand im Auftrag von einem ersten Benutzer an mindestens einen zweiten Benutzer geliefert wird, eine virtuelle Umgebung zur Verfügung gestellt wird, wobei dem ersten Benutzer ein erster Avatar und dem zweiten Benutzer ein zweiter Avatar zugeordnet wird, dass mittels des ersten Avatars mindestens ein virtueller Gegenstand gewählt wird und an den zweiten Avatar übertragen wird, dass mittels eines Benachrichtigungsmoduls eine Empfangsmitteilung generiert und dem zweiten Benutzer gesendet wird, dass die Generierung und Übermittlung des Gegenstands- und/oder Dienstleistungslieferungsauftrags durch den zweiten Benutzer akzeptiert wird, wobei die Lieferungsdaten des zweiten Benutzers an ein Auftragserfassungsmodul gesendet werden, und dass mittels des Auftragserfassungsmoduls ein Gegenstands- und/oder Dienstleistungslieferungsauftrag generiert und an mindestens einen Lieferungsdienstanbieter übermittelt wird.

Der Vorteil dieser Erfindung liegt insbesondere darin, dass die Gegenstands- und/oder Dienstleistungslieferungsaufträge direkt dank den Avataren in der virtuellen Umgebung generiert und an den oder die entsprechenden realen Benutzer, welche den jeweiligen Avataren entsprechen, übermittelt werden können. Ausserdem ist es zur Generierung und Übermittlung von Gegenstands- und/oder Dienstleistungslieferungsaufträgen gemäss dieser Erfindung nicht notwendig, dass die Lieferungsadresse der jeweiligen Empfänger vorderhand bekannt ist. So können insbesondere die persönlichen Beziehungen zwischen Personen, welche sich lediglich in einer virtuellen Umgebung entwickeln, dank dieser Erfindung gepflegt werden und indirekt auch in die reale Welt übertragen werden. Dabei besteht zu jedem Zeitpunkt absolute keine Gefahr für die Zweckentfremdung von persönlichen Daten (insbesondere der persönlichen Adresse), so dass auch solche Benutzer, welche grosse Bedenken betreffend die Wahrung der Privatsphäre äussern, dank dieser Erfindung nicht auf die Benutzung solcher Systeme verzichten müssen. Zudem erhält der zweite Benutzer (der Empfänger) zuerst eine Mitteilung über den Empfang eines Gegenstandes oder einer Dienstleistung, so dass er zu diesem Zeitpunkt entscheiden kann, ob er die Gegenstands- bzw. Dienstleistungslieferung überhaupt akzeptieren möchte. Erst bei einer positiven Entscheidung und Übermittlung der Lieferungsdaten des zweiten Benutzers an das Auftragserfassungsmodul werden die Lieferungsaufträge auch tatsächlich ausgelöst. Also kann dank dieser Erfindung auch jederzeit gewährleistet werden, dass die Empfänger auch wirklich nur diejenigen Gegenstände und/oder Dienstleistungen geliefert bekommen, welche sie auch tatsächlich erhalten möchten. Schliesslich spielt es grundsätzlich auch überhaupt keine Rolle, ob die Gegenstände bzw. Dienstleistungen an eine andere Person oder an den Sender selbst gesendet werden. Sender und Empfänger können daher selbstverständlich auch ein und dieselbe Person sein.

In einer Ausführungsvariante werden die Lieferungsdaten des zweiten Benutzers nach Empfang der Empfangsmitteilung durch den zweiten Benutzer eingegeben und vom Auftragserfassungsmodul erfasst. Diese Ausführungsvariante hat insbesondere den Vorteil, dass die Sicherheit der persönlichen Daten garantiert werden kann. Die Lieferungsdaten werden lediglich bei Bedarf vom zweiten Benutzer eingegeben und an das Auftragserfassungsmodul gesendet. Diese Lieferungsdaten werden anschliessend zur Generierung des Gegenstands- und/oder Dienstleistungslieferungsauftrags verwendet und nicht anderweitig gespeichert oder eingesetzt. Dadurch kann zuverlässig gewährleistet werden, dass die Privatsphäre der Benutzer trotz Verwendung des erfindungsgemässen Verfahrens unverletzt bleibt.

In einer anderen Ausführungsvariante werden die Lieferungsdaten des zweiten Benutzers in einer Benutzerdatenbank dem zweiten Benutzer zugeordnet gespeichert, und nach Empfang der Empfangsmitteilung durch den zweiten Benutzer freigegeben und vom Auftragserfassungsmodul erfasst. Der Vorteil dieser Ausführungsvariante liegt vor allem darin, dass die Benutzer ihre Lieferungsdaten nicht jedes Mal erneut eingeben müssen, sondern die einmal gespeicherten Daten einfach freigeben können. Dies ist vorteilhaft, insbesondere bei Benutzern, welche in der virtuellen Welt viele Bekannte haben und deshalb auch eine grössere Anzahl von Gegenstands- bzw. Dienstleistungslieferungen erhalten. Ein wiederholtes Eingeben von Lieferungsdaten kann auf die Dauer aus diesem Grund auch ein Grund sein, dass die Verwendung des erfindungsgemässen Verfahrens nicht optimal wird. Dabei muss die Benutzerdatenbank so konzipiert werden, dass die gespeicherten Lieferungsdaten lediglich und ausschliesslich von dem jeweiligen Benutzer selber eingesehen und einfach verwaltet werden können. Auf diese Weise kann daher auch garantiert werden, dass diese Daten trotzdem nicht von Unbefugten eingesehen werden können, wodurch die Privatsphäre auch in diesem Fall effizient gewahrt werden kann.

In einer weiteren Ausführungsvariante werden die Lieferungsdaten des zweiten Benutzers nach der Generierung und Übermittlung des Gegenstands- und/oder Dienstleistungslieferungsauftrags gelöscht. Dazu kann ein besonderes Löschmodul vorgesehen werden. Diese Ausführungsvariante hat insbesondere den Vorteil, dass die verwendeten Lieferungsdaten sofort wieder vollkommen gelöscht werden, wodurch auch eine unfreiwillige Weitergabe dieser Daten an Dritte, oder auch ein unbefugtes Zugreifen auf diese Daten durch Dritte nicht möglich ist. Nach der Generierung und Übermittlung des Gegenstands- und/oder Dienstleistungslieferungsauftrags an den (oder die) entsprechenden Lieferungsdienstleistungsanbieter können also die persönlichen Lieferungsdaten des Empfängers erneut nicht durch Unbefugte eingesehen werden, wodurch die Wahrung der Privatsphäre aller Benutzer noch besser geschützt wird.

In einer anderen Ausführungsvariante wird der mittels des ersten Avatars gewählte virtuelle Gegenstand an eine Gruppe von zweiten Avataren übertragen. Der Vorteil dieser Ausführungsvariante liegt insbesondere darin, dass ein Gegenstand durch eine einzige Aktion in der virtuellen Umgebung auch an eine ganze Gruppe von Benutzern geliefert werden kann. Diese Variante ist vor allem vorteilhaft bei Gruppierungen von Benutzern (z.B. in einem Verein, einem Chor u.ä.), welche simultan beschenkt werden können. Dabei kann nach Bedarf grundsätzlich entweder ein einziger Gegenstands- und/oder Dienstleistungslieferungsauftrag für die gesamte Gruppe von Benutzern gemeinsam, oder aber jeweils ein individueller Gegenstands- und/oder Dienstleistungslieferungsauftrag für jeden einzelnen Benutzer generiert und übermittelt werden.

In einer wieder anderen Ausführungsvariante hat der virtuelle Gegenstand die Form und/oder das Erscheinungsbild des entsprechenden reellen Gegenstandes. Diese Ausführungsvariante hat insbesondere den Vorteil, dass die Durchführung des erfindungsgemässen Verfahrens noch weiter vereinfacht und benutzerfreundlich gemacht werden kann. So können in der virtuellen Welt Gegenstände eingesetzt werden, welche in ihrer Form bzw. in ihrem Erscheinungsbild sehr stark an diejenigen realen Gegenstände erinnern, welche anschliessend in der realen Welt auch tatsächlich an die jeweiligen Benutzer ausgeliefert werden. So kann der Empfänger unter anderem auch aufgrund des Aussehens des gewählten und vorgeschlagenen Gegenstands viel fundierter entscheiden, ob er ihn überhaupt empfangen möchte. Dies ist auch besonders vorteilhaft, wenn der Sender und Empfänger dieselbe Person sind, wenn also dank dem erfindungsgemässen Verfahren virtueller Einkauf realisiert wird. Es ist vom grossen Vorteil, die einzukaufenden Gegenstände in ihrer realer Form ansehen zu können, um eine bessere Plattform für die Auswahl der Produkte zu erhalten.

In einer nochmals anderen Ausführungsvariante werden die Lieferungsdaten des zweiten Benutzers direkt an den Lieferungsdienstanbieter übermittelt. Der Vorteil dieser Ausführungsvariante liegt insbesondere darin, dass die Lieferungsdaten gar nicht dem Betreiber des Systems mit der virtuellen Umgebung zur Verfügung gestellt werden, so dass auch jeglicher Zugriff von Unbefugten und die Verletzung der Privatsphäre von Benutzern dadurch komplett ausgeschlossen werden kann.

In einer weiteren Ausführungsform werden zu einem virtuellen Gegenstand zwei oder mehrere Gegenstands- und/oder Dienstleistungslieferungsaufträge generiert. Der Vorteil dieser Ausführungsvariante liegt vor allem darin, dass dank einem einzigen Vorgang der Gegenstandsauswahl mehrere Gegenstands- und/oder Dienstleistungslieferungsaufträge generiert werden können. Insbesondere kann auch der entsprechende Gegenstand so konzipiert werden, dass er direkt auf mehrere Gegenstands- und/oder Dienstleistungslieferungsaufträge hinweist. Beispielsweise kann durch die Wahl eines bestimmten Gegenstandes eine periodische Lieferung in der realen Welt gestartet werden. Ausserdem kann ein gleicher Gegenstand auch an verschiedene Benutzer gesendet werden. So können wesentliche Zeiteinsparungen in der Anwendung bewerkstelligt werden, wodurch die Benutzerfreundlichkeit des erfindungsgemässen Verfahrens und der Nutzen für die Benutzer des Systems noch weiter erhöht werden können.

An dieser Stelle soll festgehalten werden, dass sich die vorliegende Erfindung neben dem erfindungsgemässen Verfahren auch auf ein System und eine Vorrichtung zur Ausführung dieses Verfahrens bezieht.

### Kurze Beschreibung der Zeichnungen

Nachfolgend wird eine Ausführung der vorliegenden Erfindung anhand eines Beispiels beschrieben. Das Beispiel der Ausführung wird durch die folgenden beigelegten Figuren 1 bis 4 illustriert:
Figur 1 zeigt ein schematisches Diagramm eines Systems, welcher zur Realisierung des erfindungsgemässen Verfahrens verwendet werden kann.
Figur 2 zeigt schematisch einen Teil des Systems aus Figur 1, in welchem das erfindungsgemässe Verfahren gemäss einer besonderen Ausführungsvariante der Erfindung dargestellt ist.
Figur 3 zeigt schematisch den Ablauf des erfindungsgemässen computerimplementierten Verfahrens gemäss einer besonderen Ausführungsvariante der Erfindung.
Figur 4 zeigt schematisch den Ablauf der Generierung und Übermittlung eines Gegenstands- und/oder Dienstleistungslieferungsauftrags nach dem erfindungsgemässen computerimplementierten Verfahren gemäss einer besonderen Ausführungsvariante der Erfindung.

### Ausführungsformen der Erfindung

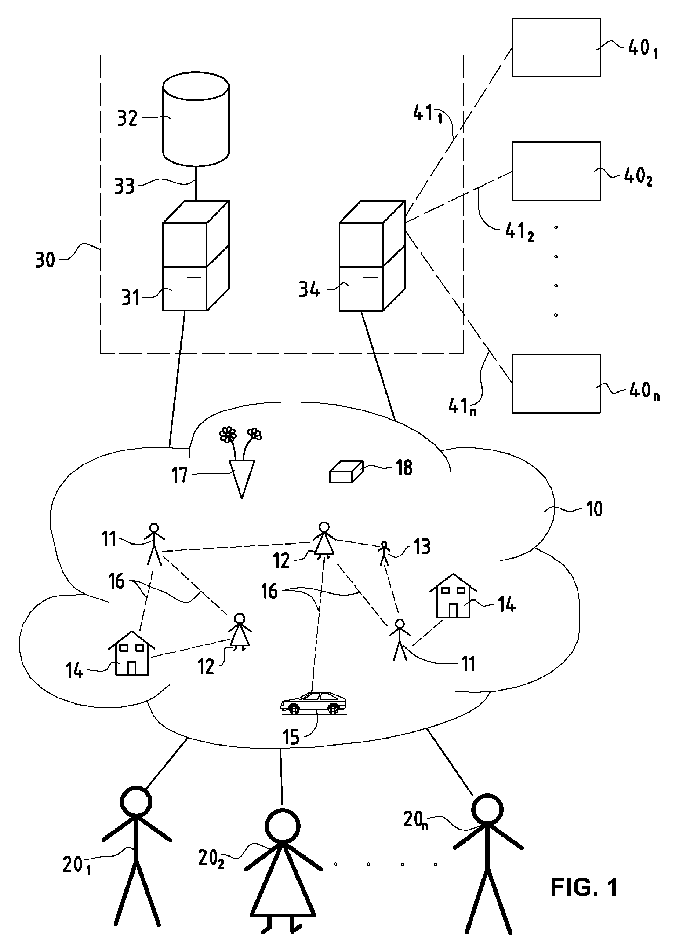

Figur 1 illustriert schematisch ein System, mittels welchem das erfindungsgemässe computerimplementierte Verfahren realisiert werden kann. Es ist für einen Fachmann aber selbstverständlich klar, dass das dargestellte System lediglich eine der vielen Realisationsformen darstellt, und dass auch andere Realisierungsformen durchaus möglich sind, ohne dass dabei vom ursprünglichen Erfindungsgedanken abgesehen wird.

In Figur 1 bezieht sich das Bezugszeichen 10 auf eine virtuelle Umgebung, welche durch einen Umgebungsserver 31 zur Verfügung gestellt werden kann. Diese virtuelle Umgebung kann beispielsweise wie die virtuelle Umgebung "Second Life ®" aufgebaut (oder auch "Second Life ®" selber) sein. In diesem Zusammenhang können aber auch andersartige virtuellen Umgebungen in Fragen kommen, ohne dass das erfindungsgemässe Verfahren irgendwelche seiner Eigenschaften verlieren würde.

In der virtuellen Umgebung 10 werden verschiedene virtuellen Persönlichkeiten 11, 12, 13 kreiert, welche sich in dieser virtuellen Umgebung 10 bewegen, miteinander kommunizieren, und verschiedene andere Tätigkeiten ausüben können. Dabei können diese virtuellen Persönlichkeiten 11, 12, 13 (auch Avatare genannt) ein im Wesentlichen menschenähnliches Aussehen haben, aber auch andere Gestalten aufweisen. Die virtuelle Umgebung 10 kann generell sehr naturgetreu aufgebaut sein. So kann bei den Avataren beispielsweise zwischen männlichen 11, weiblichen 12 und Kinder-Avataren 13 unterschieden werden. Auch können sich in der virtuellen Umgebung 10 zum Beispiel Häuser 14 und Autos 15, oder aber andere Objekte befinden, welche der realen Welt nachempfunden sind. Unter diesen anderen Objekten können sich insbesondere auch Geschenkgegenstände befinden, wie zum Beispiel ein Blumenstrauss 17 oder eine Schachtel mit Pralinen 18, welche sich insbesondere dazu eignen, von einem Avatar 11, 12, 13 an einen oder mehrere andere Avatare 11, 12, 13 übertragen zu werden.

In der virtuellen Umgebung 10 (welche im Prinzip problemlos auch virtuelle Welt genannt werden kann) können, wie in der realen Welt, auch Verhältnisse 16 zwischen den einzelnen Avataren 11, 12, 13 und den Objekten 14, 15 aufgebaut und bei Bedarf auch graphisch dargestellt werden. So kann ein männlicher Avatar 11 zum Beispiel ein Haus 14 besitzen und mit einem anderen Avatar 12 befreundet oder verheiratet sein. Diese zwei Avatare 11 und 12 können zum Beispiel auch ein Kind-Avatar 13 haben, welches mit ihnen in ihrem Haus 14 wohnen kann, und welchem sie eine Schachtel Pralinen 18 zum Geburtstag geschenkt haben. Da die virtuelle Umgebung 10 auch sehr naturgetreu aufgebaut werden kann, können grundsätzlich sämtliche bestehenden Objekte und Verhältnisse zwischen Personen und Objekten auch in dieser virtuellen Umgebung 10 abgebildet werden.

Grundsätzlich wird jeder Avatar 11, 12, 13 durch einen realen Benutzer 20₁, 20₂, ..., 20ₙ der virtuellen Umgebung kontrolliert. Es sind auch Situationen denkbar, in welchem mehrere Avatare 11, 12, 13 durch einen einzigen Benutzer 20₁, 20₂, ..., 20ₙ, oder aber in welchen ein Avatar 11, 12, 13 durch mehrere Benutzer 20₁, 20₂, ..., 20ₙ kontrolliert wird. Nachfolgend wird jedoch angenommen, dass einem einzigen Benutzer 20₁, 20₂, ..., 20ₙ tatsächlich auch eine einzige virtuelle Persönlichkeit 11, 12, 13 zugeordnet ist. Selbstverständlich ist dadurch der Schutzumfang der Patentansprüche nicht in dieser eingeschränkten Version zu interpretieren.

Die realen Benutzer 20₁, 20₂, ..., 20ₙ können sich über das Internet (World Wide Web) mit der virtuellen Umgebung 10 verbinden, um ihre Avatare 11, 12, 13 zu steuern. Dazu werden am Umgebungs-Server 31 alle nötigen Kommunikationsschnittstellen zur Verfügung gestellt. Der Zugriff auf die virtuelle Umgebung 10 kann selbstverständlich auch auf andere Weise geschehen, was aber für die Durchführung des erfindungsgemässen Verfahrens nicht entscheidend ist. Auch können mehrere Benutzer 20₁, 20₂, ..., 20ₙ gemeinsame Zugriffsmöglichkeiten auf die virtuelle Umgebung 10 nutzen, oder es können verschiedene Zugriffsmöglichkeiten für denselben Benutzer 20₁, 20₂, ..., 20ₙ zur Verfügung gestellt werden.

Die Avatare 11, 12, 13 können durch die Benutzer 20₁, 20₂, ..., 20ₙ über einen herkömmlichen Computer (Desktop oder Notebook), oder ein anderes handelsübliches Gerät gesteuert werden. Es ist aber auch denkbar, dass besondere Geräte zur Verfügung gestellt werden, welche sich ausschliesslich für die Verwendung im Zusammenhang mit der virtuellen Umgebung 10 eignen. Unter solchen Geräten sind unter anderem alle möglichen sog. Customer Premise Equipment (CPE) zu verstehen, die einerseits mobile Kommunikationsendgeräte, beispielsweise GSM-, UMTS- oder Satellitenmobilfunktelefonen, aber andererseits auch sämtliche andere IP-fähige Geräte umfassen, wie z.B. Personal Computers (PC), Personal Digital Assistants (PDA), tragbare Computer (Laptops) oder Spielkonsolen. Sie können mit physikalischen Netzwerkschnittstellen ausgestattet sein, über welche Dateninformationen mit einem Kommunikationsnetz ausgetauscht werden können. Die Netzwerkschnittstellen können mehrere unterschiedliche Netzwerkstandards unterstützen, beispielsweise GSM- (Global System for Mobile Communication), GPRS- (Generalised Packet Radio Service), UMTS- (Universal Mobile Telecommunications System) oder Satellitenfunksysteme. Diese Schnittstellen können aber auch Schnittstellen zu lokalen drahtlosen Netzwerken sein, beispielsweise WLAN (Wireless Local Area Network) 802.11, Bluetooth, Infrarot-Netzwerk oder andere kontaktlose Schnittstellen.

Mit dem Umgebungs-Server 31 kann insbesondere auch eine Benutzerdatenbank 32 über eine Leitung 33 verbunden sein. In dieser Benutzerdatenbank 32 können beispielsweise die Informationen über die einzelnen realen Benutzer 20₁, 20₂, ..., 20ₙ (beispielsweise der Name, das Alter, die Adresse, die Telefonnummer, usw.) gespeichert werden. Diese Informationen über die Benutzer 20₁, 20₂, ..., 20ₙ werden einmal von den Benutzern 20₁, 20₂, ..., 20ₙ eingegeben und dann dem jeweiligen Benutzer 20₁, 20₂, ..., 20ₙ zugeordnet in dieser Benutzerdatenbank 32 abgespeichert. Dies kann insbesondere bei der erstmaligen Registrierung geschehen, bevor der Benutzer 20₁, 20₂, ..., 20ₙ überhaupt einen Avatar 11, 12, 13 in der virtuellen Umgebung 10 kreieren kann. Die persönlichen Daten der Benutzer 20₁, 20₂, ..., 20ₙ werden in der Benutzerdatenbank 32 aber so gespeichert, dass lediglich die Benutzer 20₁, 20₂, ..., 20ₙ selber den Zugriff auf diese Daten haben können, und die Daten nach Bedarf extrahieren und editieren können. Dazu können insbesondere auch Verschlüsselungsmethoden verwendet werden, so dass auch die Übertragung der Daten stets abgesichert geschieht. Schliesslich ist es auch möglich, die persönlichen Daten nicht in einer zentralen Benutzerdatenbank 32, welche mit dem Umgebungs-Server 31 direkt über die Leitung 33 verbunden ist, abzuspeichern, sondern in einer lokalen Datenbank (nicht dargestellt), welche sich auf dem Computer jedes Benutzers 20₁, 20₂, ..., 20ₙ befindet und welche auf jeden Fall von Zugriffen Unbefugter geschützt ist. In diesem Fall kann sich die Leitung 33 beispielsweise auf eine Internet-Kommunikationsleitung oder eine andere geeignete Kommunikationsleitung beziehen. Jedoch kann die Benutzerdatenbank 32 ebenfalls komplett ausgelassen werden, so dass die persönlichen Daten der Benutzer 20₁, 20₂, ..., 20ₙ gar nicht an einem Ort fest gespeichert werden.

Schliesslich bezieht sich das Bezugszeichen 34 in Figur 1 auf ein Auftragserfassungsmodul. Dieses Auftragserfassungsmodul 34 kann als ein vollkommen selbständiges Gerät implementiert werden (wie beispielsweise in Figur 1 dargestellt), oder aber als ein Modul, welches in ein anderes Gerät (wie zum Beispiel in den Umgebungs-Server 31) integriert wird. Auch kann dieses Auftragserfassungsmodul seinerseits wiederum eine Datenbank 35 beinhalten. Je nach System ist es möglich, dass entweder nur der Umgebungs-Server 31 oder nur das Auftragserfassungsmodul 34 über eine Anbindung an eine Benutzerdatenbank über eine entsprechende Kommunikationsleitung verfügen, es kann aber auch sein, dass beide Komponenten, also der Umgebungs-Server 31 und das Auftragserfassungsmodul 34 eine eigene Anbindung an ihre eigene Datenbank beinhalten und die persönlichen darauf gespeicherten Daten entweder komplementär oder redundant auf den beiden separaten Datenbanken gespeichert sind. In der folgenden Beschreibung wir nun davon ausgegangen dass das Auftragserfassungsmodul 34 die Berechtigung besitzt, auf die in der Benutzerdatenbank 32 gespeicherten Daten des Umgebungs-Server 31 zuzugreifen. Selbstverständlich ist dadurch der Schutzumfang der Patentansprüche nicht in dieser eingeschränkten Version zu interpretieren und beinhaltet gegebenenfalls die zweite Benutzerdatenbank 35, welche and das Auftragserfassungsmodul 34 angeschlossen ist. Grundsätzlich kann also in diesem Zusammenhang auch von einer Kontrollvorrichtung 30 gesprochen werden, welche die Funktionalitäten des Umgebungs-Servers 31, der Benutzerdatenbanken 32 und 35, sowie des Auftragserfassungsmoduls 34 gruppiert, wobei es sich dabei durchaus auch um ein verteiltes System handeln kann.

Verschiedene Lieferungsdienstanbieter 40₁, 40₂, ..., 40ₙ sind über die jeweiligen Verbindungen 41₁, 41₂, ..., 41 ₙ direkt oder indirekt mit dem Auftragserfassungsmodul 34 verbunden. Bei den Lieferungsdienstanbietern 40₁, 40₂, ..., 40ₙ kann es sich grundsätzlich um beliebige Dienstanbieter handeln, welche entweder ausschliesslich für die Zwecke der Gegenstandslieferung im Zusammenhang mit der virtuellen Umgebung 10, oder aber für allgemeine Lieferungen zur Verfügung stehen. So können die Lieferungsdienstanbieter 40₁, 40₂, ..., 40ₙ beispielsweise auch solche Firmen sein, welche bereits einen Lieferungsdienst für Bestellungen durch herkömmliche computerimplementierte Verfahren ermöglichen. Beispiele solcher Lieferungsdienstanbieter sind insbesondere Blumengeschäfte, Schokoladenfabrikanten, Esswarenhersteller, aber auch Möbelgeschäfte, Buchhandlungen oder ähnliche Geschäfte. Es ist aber auch vorstellbar, dass es sich bei den Lieferungsdienstanbietern 40₁, 40₂, ..., 40ₙ um herkömmliche Lieferungsunternehmen (z.B. die Post, die Kurierdienstgesellschaften, etc.) handelt. Dabei können auch verschiedene Lieferungsdienstanbieter 40₁, 40₂, ..., 40ₙ für die Lieferung gleicher oder ähnlicher Gegenstände eingesetzt werden, je nach Verfügbarkeit oder einem anderen Parameter.

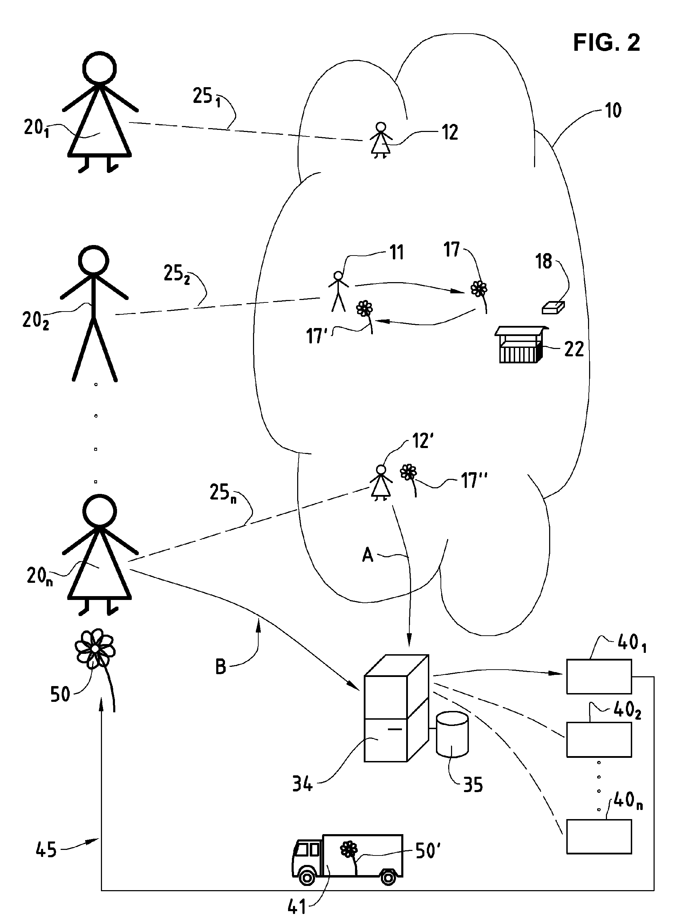

In Figur 2 wird ein Teil des Systems aus Figur 1 gezeigt, wobei das erfindungsgemässe Verfahren darin schematisch aufgezeigt wird. Es werden für die bereits in Figur 1 dargestellten Elemente dieselben Bezugszeichen verwendet. So bezieht sich das Bezugszeichen 10 erneut auf die virtuelle Umgebung, in welcher sich die Avatare 12, 11 und 12' befinden. Die Avatare 12, 11 und 12' werden jeweils von den realen Benutzern 20₁, 20₂ und 20ₙ kontrolliert. Selbstverständlich kann die virtuelle Umgebung 10 noch viele weitere Avatare enthalten, welche von den anderen realen Benutzern gesteuert werden. Aus Gründen der Übersichtlichkeit werden in Figur 2 lediglich die drei Teilnehmer des Systems gezeigt. Die Kontrollbeziehung zwischen den realen Benutzern 20₁, 20₂ und 20ₙ wird in Figur 2 durch die gestrichelte Linien 25₁, 25₂ und 25ₙ dargestellt.

Die virtuelle Umgebung 10 wird dank der Kontrollvorrichtung 34 mit der assoziierten Datenbank 35 gesteuert. Wie bereits weiter oben beschrieben kann die Benutzerdatenbank 35 (ensprechend in den Funktionalitäten der Benutzerdatenbank 32, jedoch angebunden nur an die erfindungsgemässe Vorrichtung und nicht abhängig vom Umgebungs-Server 31) die gespeicherten Informationen über die Benutzer 20₁, 20₂, ..., 20ₙ des Systems enthalten, welche einmal (beispielsweise bei der erstmaligen Verwendung des Systems) von den Benutzern 20₁, 20₂, ..., 20ₙ eingegeben werden. Es ist dabei durchaus denkbar, dass gewisse Benutzer 20₁, 20₂, ..., 20ₙ ihre persönlichen Daten lieber nicht in die Benutzerdatenbank 35 eingeben möchten, während die anderen Benutzer 20₁, 20₂, ..., 20ₙ diesbezüglich keine Bedenken haben. In jedem Fall sind die persönlichen Daten jedes Benutzers 20₁, 20₂, ..., 20ₙ so in der Benutzerdatenbank 35 gespeichert, dass Unbefugte keinesfalls den Zugang zu diesen Daten erlangen können. Zudem sind diese persönlichen Daten auch derart gespeichert, dass auch die Betreiber des Systems auf sie nicht zugreifen können und ausschliesslich von den Benutzern 20₁, 20₂, ..., 20ₙ selber eingesehen und angepasst werden können.

Diverse Lieferungsdienstanbieter 40₁, 40₂, ..., 40ₙ sind mit der Kontrollvorrichtung 34 verbunden. Für diese Verbindung der Lieferungsdienstanbieter 40₁, 40₂, ..., 40ₙ mit der Kontrollvorrichtung 34 können herkömmliche Kommunikationsschnittstellen verwendet werden. Auch können die Kontrollvorrichtung 30 und ein gegebener Lieferungsdienstanbieter 40₁, 40₂, ..., 40ₙ über zwei oder mehrere verschiedene Kommunikationsschnittstellen miteinander verbunden sein, um eine optimale Erreichbarkeit zu garantieren. Diese Kommunikationsschnittstellen können auch besonders entwickelte und an die Bedürfnisse des einzelnen Lieferungsdienstanbieters 40₁, 40₂, ..., 40ₙ angepasste Schnittstellen sein.

Die einzelnen Benutzer 20₁, 20₂, ..., 20ₙ können über ihre Avatare 11, 12, 13 verschiedene Beziehungen in der virtuellen Umgebung 10 bilden. Insbesondere ist es möglich, dass ein erster Benutzer 20₂ über seinen Avatar 11 eine freundschaftliche Beziehung mit einem zweiten Benutzer 20ₙ und seinem Avatar 12' eingeht. Nun kann der erste Benutzer 20₂ geneigt sein, dem zweiten Benutzer 20ₙ ein Geschenk 17, 18 zu senden. Dazu kann der erste Benutzer 20₂ über seinen Avatar 11 das entsprechende Geschenk 17 in der virtuellen Welt 10 erwerben. Beispielsweise kann in der virtuellen Welt 10 ein virtueller Verkaufsstand oder Einkaufsladen 22 zur Verfügung gestellt werden, wo Geschenke 17, 18, aber auch andere Waren und Dienstleistungen erworben werden können. Insbesondere kann der Verkaufsstand 22 tatsächlich so designiert und gestaltet werden, dass der Avatar 11 sich inmitten der angebotenen Waren und Dienstleistungen bewegen, diese nach Wunsch anfassen und begutachten, und am Schluss wie in einem realen Laden auswählen und bezahlen kann. Dabei können für der Erwerb der Waren bzw. Dienstleistungen entweder die virtuellen Zahlungsmittel (in Second Life heissen diese zum Beispiel "Linden-Dollar"), oder aber reale Zahlungsmittel (z.B. herkömmliche Kreditkarten) verwendet werden. Natürlich kann bei der Gestaltung der Verkaufsstelle 22 eine grosse Freiheit zum Zuge kommen, ohne dass der Grundgedanke der Erfindung dadurch beeinträchtigt wäre.

Die angebotenen virtuellen Gegenstände 17, 18 können insbesondere so gestaltet werden, dass sie äusserlich (d.h. im Bezug auf die Form, Farbe, etc.) den realen Gegenständen, welche sie repräsentieren, entsprechen. So ist beispielsweise möglich, massstabsgetreue kleinere (aber auch grössere) Versionen von Blumensträussen und/oder Pralinenschachteln darzustellen. So kann insbesondere das Erlebnis bei der Auswahl von Gegenständen dem Erlebnis beim Erwerb von realen Gegenständen übernommen werden. Auch bringt dies die Vorteile dahingehend, dass die konkreten Gegenstände an die Avatare 11, 12, 13 übertragen werden können, wodurch sich auch das Empfangserlebnis demjenigen aus der realen Welt anpasst.

Nachdem mittels des ersten Avatars 11 der Gegenstand 17' (die erworbene Version des Gegenstands 17) gewählt worden ist, kann dieser virtuelle Gegenstück des entsprechenden realen Gegenstands an einen zweiten Avatar 12' übertragen werden. Dazu kann insbesondere der erste Avatar 11 zum zweiten Avatar 12' gehen und den erworbenen Gegenstand 17' dem zweiten Avatar 12' direkt übergeben, wie dies in der realen Welt auch geschehen würde. Es ist aber durchaus denkbar, dass die Übermittlung des erworbenen Gegenstandes 17' vom ersten Avatar 11 an den zweiten Avatar 12' auf eine andere Weise realisiert wird. Der zweite Avatar 12' nimmt den übergebenen Gegenstand 17' vom ersten Avatar 11 (in Figur 2 durch das Bezugszeichen 17" dargestellt). Daraufhin wird mittels des Benachrichtigungsmoduls (in Figur 2 nicht dargestellt - kann aber als Teil der Kontrollvorrichtung 34 realisiert werden) eine Empfangsmitteilung generiert und dem zweiten Benutzer 20ₙ gesendet. Diese Empfangsmitteilung kann beispielsweise als eine E-Mail-Nachricht, eine SMS-Mitteilung (Short Messaging Service), MMS-Mitteilung (Multimedia Messaging Service), oder eine beliebige andere Nachricht gesendet werden.

Der zweite Benutzer 20ₙ kann nun die Empfangsmitteilung aufnehmen und entscheiden, ob er den übermittelten Gegenstand (bzw. die Dienstleistung) annehmen möchte. Wenn dies der Fall ist, so kann der zweite Benutzer 20ₙ die Generierung und Übermittlung des entsprechenden Gegenstands- bzw. Dienstleistungslieferungsauftrags akzeptieren. Dies kann zum Beispiel durch den Klick auf einen in der Empfangsmitteilung zur Verfügung gestellten Link, oder auf eine andere Weise geschehen. Wenn ein Link zur Verfügung gestellt wird, so wird der zweite Benutzer 20ₙ beim Klick beispielsweise auf eine Webseite geführt, auf welcher ein weiterer Klick zur definitiven Bestätigung notwendig sein kann. Selbstverständlich sind auch bei diesem Punkt viele verschiedene Ausführungsformen möglich, welche mit dem grundlegenden Gedanken der Erfindung übereinstimmen. An dieser Stelle wird der zweite Benutzer 20ₙ vom System aufgefordert, seine Lieferungsdaten anzugeben. Der zweite Benutzer 20ₙ hat grundsätzlich auch zu diesem Zeitpunkt noch die Möglichkeit, die Lieferung des erhaltenen Gegenstandes 17" abzulehnen. Der zweite Benutzer 20ₙ hat nun zwei Möglichkeiten, um seine Lieferungsdaten an das entsprechende Auftragserfassungsmodul (nicht dargestellt, Teil der Kontrollvorrichtung 34) zu senden:
A: In einer ersten Version werden die Lieferungsdaten des zweiten Benutzers 20ₙ direkt durch ihn eingegeben und vom Auftragserfassungsmodul erfasst. Dazu kann beispielsweise ein Webformular verwendet werden, wobei die erfassten Daten über die entsprechende Web-Schnittstelle an das Auftragserfassungsmodul übermittelt werden. Alternativ kann vom zweiten Benutzer 20ₙ auch eine E-Mail-, eine SMS-, eine MMS- oder eine andere Nachricht verfasst und an das Auftragserfassungsmodul gesendet werden. Auch hier sind selbstverständlich auch weitere Realisationsmöglichkeiten denkbar.
B: In einer zweiten Version kann der zweite Benutzer 20ₙ auf die in der Benutzerdatenbank 35 (bzw. 32) gespeicherten Daten zugreifen. In diesem Fall gibt der zweite Benutzer 20ₙ nach dem Empfang der Empfangsmitteilung seine Lieferungsdaten frei, so dass sie anschliessend an das Auftragserfassungsmodul übermittelt und vom Auftragserfassungsmodul erfasst werden können. Auch in diesem Fall können zur Freigabe und zur Übermittlung der Daten verschiedene Realisationsvariante zur Verfügung gestellt werden (z.B. Webseite mit einem entsprechenden Freigabe-Knopf, etc.).

Wenn die Lieferungsdaten des zweiten Benutzer 20ₙ an das Auftragserfassungsmodul übermittelt und vom Auftragserfassungsmodul erfasst worden sind, kann mittels dieses Auftragserfassungsmoduls ein entsprechender Gegenstands- und/oder Dienstleistungslieferungsauftrag generiert und an den entsprechenden bzw. die entsprechenden Lieferungsdienstanbieter 40₁, 40₂, ..., 40ₙ übermittelt werden. Der Lieferungsdienstanbieter 40₁, 40₂, ..., 40ₙ kann dann den entsprechenden realen Gegenstand 50' vorbereiten und über das Transportsystem 45 dank dem Transportmechanismus 41 an den zweiten Benutzer 20ₙ liefern. Schliesslich erhält der zweite Benutzer 20ₙ den entsprechenden realen Gegenstand 50, welcher dem vom ersten Benutzer 20₂ mittels seines Avatars 11 in der virtuellen Umgebung 10 gewählten und an den Avatar 12' des zweiten Benutzers 20ₙ übergebenen Gegenstand 17 entspricht. Selbstverständlich können die Art und Weise der Lieferung der realen Gegenstände 50 bzw. der realen Dienstleistungen variieren.

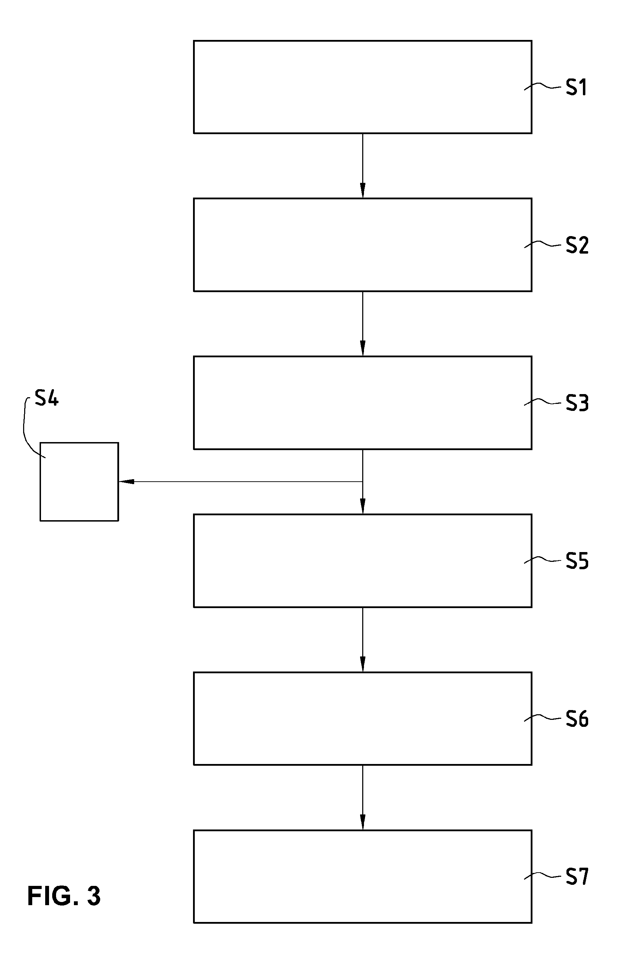

In Figur 3 wird schematisch der oben beschriebene Ablauf des erfindungsgemässen computerimplementierten Verfahrens gemäss einer besonderen Ausführungsvariante der Erfindung nochmals illustriert. So wird im ersten Schritt S1 mittels des dem ersten Benutzer 20₁, 20₂, ..., 20ₙ zugeordneten ersten Avatars 11, 12, 13 mindestens ein virtueller Gegenstand 17, 18 ausgewählt und erworben. Anschliessend wird dieser Gegenstand 17, 18 im zweiten Schritt S2 an den dem zweiten Benutzer 20₁, 20₂, ..., 20ₙ zugeordneten zweiten Avatar 11, 12, 13 übertragen. Im dritten Schritt S3 wird dann mittels eines Benachrichtigungsmoduls 34 eine Empfangsmitteilung generiert und dem zweiten Benutzer 20₁, 20₂, ..., 20ₙ gesendet. Nun kann der zweite Benutzer 20₁, 20₂, ..., 20ₙ entscheiden, ob er die Gegenstands- bzw. Dienstleistungslieferung annehmen möchte, und wenn dies nicht der Fall ist, wird das Verfahren im Schritt S4 abgebrochen. Eventuell erhält der erste Benutzer 20₁, 20₂, ..., 20ₙ daraufhin eine entsprechende Mitteilung. Wenn aber die Lieferung vom zweiten Benutzer 20₁, 20₂, ..., 20ₙ erwünscht ist, so akzeptiert er die Generierung und Übermittlung des Gegenstands- und/oder Dienstleistungslieferungsauftrags im Schritt S5, wobei dann die Lieferungsdaten des zweiten Benutzers 20₁, 20₂, ..., 20ₙ an ein Auftragserfassungsmodul 34 gesendet werden. Im nächsten Schritt S6 wird mittels des Auftragserfassungsmoduls 34 ein Gegenstands- und/oder Dienstleistungslieferungsauftrag generiert und an mindestens einen Lieferungsdienstanbieter 40₁, 40₂, ..., 40ₙ übermittelt. Im letzten Schritt S7 erhält der erste Benutzer 20₁, 20₂, ..., 20ₙ eine Lieferungsmeldung, so dass er sicher sein kann, dass die Übergabe des virtuellen Geschenks 17 auch in der realen Welt geklappt hat.

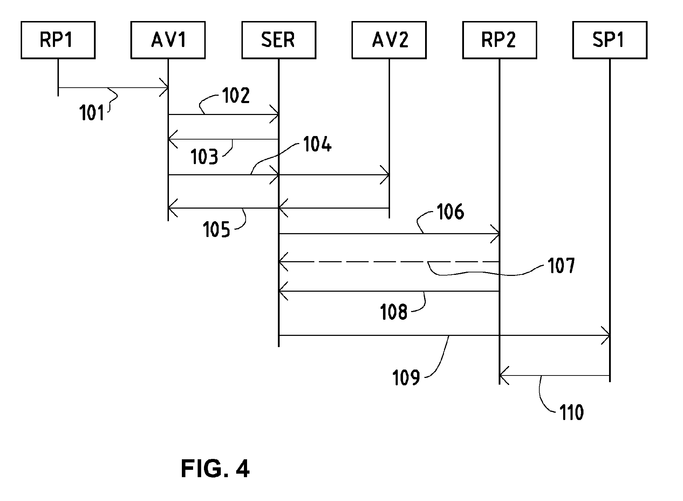

Figur 4 zeigt schliesslich schematisch den Ablauf der Generierung und Übermittlung eines Gegenstands- und/oder Dienstleistungslieferungsauftrags gemäss einer Ausführungsvariante des erfindungsgemässen computerimplementierten Verfahren. Insbesondere wird in Figur 4 der Ablauf der Interaktion der einzelnen Akteure und die dabei ausgetauschten Mitteilungen näher erläutert. In Figur 4 beziehen sich die Bezugszeichen RP1 und RP2 auf die erste und die zweite reale Person (die Benutzer 20₁, 20₂, ..., 20ₙ). Entsprechend beziehen sich die Bezugszeichen AV1 und AV2 auf diesen realen Personen RP1 und RP2 zugeordnete Avatare. Das Bezugszeichen SER bezieht sich auf den Server (die Kontrollvorrichtung 30), während sich das Bezugszeichen SP1 schliesslich auf einen bestimmten Lieferungsdienstanbieter bezieht. Der Server SER umfasst dabei möglicherweise verschiedene Module und Datenbanken und ist tatsächlich ein verteiltes System. An dieser Stelle werden diese verschiedenen Elemente und Funktionalitäten lediglich zur Einfachheit in einem einzigen Element zusammengefasst.

So gibt die erste reale Person RP1 im Schritt 101 seinem Avatar AV1 die Instruktionen, einen bestimmten Gegenstand zu wählen. Daraufhin wählt der Avatar AV1 den gewünschten Gegenstand im Schritt 102 aus, wobei die Zuordnung des gewählten und erworbenen Gegenstandes dem Avatar AV1 vom Server SER registriert wird. Der Server SER bestätigt dann im Schritt 103 die Auswahl des Gegenstandes durch den Avatar AV1. Hier kann man sich in einem konkreten Beispiel vorstellen, dass der Avatar AV1 in einen virtuellen Blumenladen geht und dort einen besonderen Blumenstrauss kauft. Über den Server SER wird einerseits gewährleistet, dass der virtuelle Gegenstand in der virtuellen Welt tatsächlich richtig angezeigt wird (d.h. als ein Miniatur-Blumenstrauss, welcher eine massstabsgetreue Replik des echten Blumenstrausses ist), und andererseits dass der Erwerb des virtuellen Gegenstandes (inklusive die Bezahlung) auch entsprechend ablaufen kann.

Nun kann der gewählte Avatar AV1 (im Schritt 104) den erworbenen virtuellen Gegenstand an den zweiten Avatar AV2 übermitteln. Auch hier ist die Hilfe des Servers SER erforderlich, damit einerseits die Übergabe des virtuellen Gegenstandes entsprechend richtig angezeigt werden kann, und dass andererseits auch eine entsprechende Auftragsauslösung gestartet werden kann. Als der Avatar AV2 den virtuellen Gegenstand entgegennimmt, wird im Schritt 105 (erneut mit Unterstützung des Servers SER) eine entsprechende Mitteilung an den ersten Avatar AV1 gesendet. Auch wird die entsprechende Auftragsauslösung nun aktiviert.

Im nachfolgenden Schritt 106 wird vom Server SER (bzw. von den entsprechenden Modulen des Servers SER) eine Empfangsmitteilung mit den Informationen über den erhaltenen Gegenstand (oder auch die Dienstleistung) erzeugt und an die zweite reale Person RP2 gesendet. Nun kann die Lieferung des realen Gegenstandes (bzw. der Dienstleistung) durch die zweite reale Person RP2 akzeptiert und die entsprechenden Lieferungsdaten an den Server SER übermittelt werden. Dazu können diese Daten durch die zweite reale Person RP2 direkt eingegeben werden (wie im Schritt 107 dargestellt), oder aber ein Auftrag an den Server SER und seine Benutzerdatenbank erteilt werden, damit die darin gespeicherten Daten freigegeben werden können (Schritt 108). Schliesslich wird vom Server SER, basierend auf den übermittelten Lieferungsdaten und allen anderen Parametern, ein entsprechender Gegenstands- bzw. Dienstleistungslieferungsauftrag generiert und im Schritt 109 an den entsprechenden Lieferungsdienstanbieter SP1 übermittelt. Im letzten Schritt 110 wird der von der ersten realen Person RP1 gewählte reale Gegenstand an die zweite reale Person RP2 auch tatsächlich ausgeliefert.

Die Erfindung ist selbstverständlich nicht auf die beschriebenen Ausführungsformen beschränkt. Dem Fachmann wird ohne weiteres klar sein, dass einige Weiterentwicklungen und Abänderungen im Rahmen der geschützten Erfindung möglich sind. Schritte des erfindungsgemässen Verfahrens, sowie Elemente des erfindungsgemässen Systems und der erfindungsgemässen Vorrichtung können je nach Bedarf durch andere Schritte und Elemente ausgetauscht werden, welche die gleichen oder ähnlichen Funktionen erfüllen. Zusätzliche Einrichtungen und Elemente können ebenfalls vorgesehen werden. Diese und andere Massnahmen und Elemente fallen aber in den Schutzbereich der Erfindung, der durch die Patentansprüche definiert wird.

## Patentansprüche

1. Computerimplementiertes Verfahren zur Generierung und Übermittlung von Gegenstands- und/oder Dienstleistungslieferungsaufträgen, wobei mindestens ein Gegenstand im Auftrag von einem ersten Benutzer (20₁, 20₂, ..., 20ₙ) an mindestens einen zweiten Benutzer (20₁, 20₂, ..., 20ₙ) geliefert wird,
**dadurch gekennzeichnet,**
**dass** eine virtuelle Umgebung (10) zur Verfügung gestellt wird, wobei dem ersten Benutzer (20₁, 20₂, ..., 20ₙ) ein erster Avatar (11, 12, 13) und dem zweiten Benutzer (20₁, 20₂, ..., 20ₙ) ein zweiter Avatar (11, 12, 13) zugeordnet wird,
**dass** mittels des ersten Avatars (11, 12, 13) mindestens ein virtueller Gegenstand (17, 18) gewählt wird und an den zweiten Avatar (11, 12, 13) übertragen wird,
**dass** mittels eines Benachrichtigungsmoduls (34) eine Empfangsmitteilung generiert und dem zweiten Benutzer (20₁, 20₂, ..., 20ₙ) gesendet wird,
**dass** die Generierung und Übermittlung des Gegenstands- und/oder Dienstleistungslieferungsauftrags durch den zweiten Benutzer (20₁, 20₂, ..., 20ₙ) akzeptiert wird, wobei die Lieferungsdaten des zweiten Benutzers (20₁, 20₂, ..., 20ₙ) an ein Auftragserfassungsmodul (34) gesendet werden, und
**dass** mittels des Auftragserfassungsmoduls (34) ein Gegenstands-und/oder Dienstleistungslieferungsauftrag generiert und an mindestens einen Lieferungsdienstanbieter (40₁, 40₂, ..., 40ₙ) übermittelt wird.

2. Computerimplementiertes Verfahren gemäss Anspruch 1, **dadurch gekennzeichnet, dass** die Lieferungsdaten des zweiten Benutzers (20₁, 20₂, ..., 20ₙ) nach Empfang der Empfangsmitteilung durch den zweiten Benutzer (20₁, 20₂, ..., 20ₙ) eingegeben und vom Auftragserfassungsmodul (34) erfasst werden.

3. Computerimplementiertes Verfahren gemäss Anspruch 1, **dadurch gekennzeichnet, dass** die Lieferungsdaten des zweiten Benutzers (20₁, 20₂, ..., 20ₙ) in einer Benutzerdatenbank (32) dem zweiten Benutzer (20₁, 20₂, ..., 20ₙ) zugeordnet gespeichert werden, und dass diese Lieferungsdaten nach Empfang der Empfangsmitteilung durch den zweiten Benutzer (20₁, 20₂, ..., 20ₙ) freigegeben und vom Auftragserfassungsmodul (34) erfasst werden.

4. Computerimplementiertes Verfahren gemäss einem der Ansprüche 1 bis 3, **dadurch gekennzeichnet, dass** die Lieferungsdaten des zweiten Benutzers (20₁, 20₂, ..., 20ₙ) nach der Generierung und Übermittlung des Gegenstands- und/oder Dienstleistungslieferungsauftrags gelöscht werden.

5. Computerimplementiertes Verfahren gemäss einem der Ansprüche 1 bis 4, **dadurch gekennzeichnet, dass** der mittels des ersten Avatars (11, 12, 13) gewählte virtuelle Gegenstand (17, 18) an eine Gruppe von zweiten Avataren (11, 12, 13) übertragen wird.

6. Computerimplementiertes Verfahren gemäss einem der Ansprüche 1 bis 4, **dadurch gekennzeichnet, dass** der virtuelle Gegenstand (17, 18) die Form und/oder das Erscheinungsbild des reellen Gegenstandes hat.

7. Computerimplementiertes Verfahren gemäss einem der Ansprüche 1 bis 6, **dadurch gekennzeichnet, dass** die Lieferungsdaten des zweiten Benutzers (20₁, 20₂, ..., 20ₙ) direkt an den Lieferungsdienstanbieter (40₁, 40₂, ..., 40ₙ) übermittelt werden.

8. Computerimplementiertes Verfahren gemäss einem der Ansprüche 1 bis 7, **dadurch gekennzeichnet, dass** zu einem virtuellen Gegenstand (17, 18) zwei oder mehrere Gegenstands- und/oder Dienstleistungslieferungsaufträge generiert werden.

9. System zur Generierung und Übermittlung von Gegenstands-und/oder Dienstleistungslieferungsaufträgen, wobei mindestens ein Gegenstand im Auftrag von einem ersten Benutzer (20₁, 20₂, ..., 20ₙ) an mindestens einen zweiten Benutzer (20₁, 20₂, ..., 20ₙ) lieferbar ist,
**dadurch gekennzeichnet,**
**dass** das System einen Umgebungs-Server (31) umfasst, mittels welchem eine virtuelle Umgebung (10) generierbar ist, wobei dem ersten Benutzer (20₁, 20₂, ..., 20ₙ) ein erster Avatar (11, 12, 13) und dem zweiten Benutzer (20₁, 20₂, ..., 20ₙ) ein zweiter Avatar (11, 12, 13) zugeordnet ist, wobei mittels des ersten Avatars (11, 12, 13) mindestens ein virtueller Gegenstand (17, 18) wählbar und an den zweiten Avatar (11, 12, 13) übertragbar ist,
**dass** das System ein Benachrichtigungsmodul (34) umfasst, mittels welchem eine Empfangsmitteilung generierbar und dem zweiten Benutzer (20₁, 20₂, ..., 20ₙ) versendbar ist,
**dass** das System ein Auftragserfassungsmodul (34) umfasst, wobei die Lieferungsdaten des zweiten Benutzers (20₁, 20₂, ..., 20ₙ) an ein Auftragserfassungsmodul (34) versendbar sind, und
**dass** mittels des Auftragserfassungsmoduls (34) ein Gegenstands-und/oder Dienstleistungslieferungsauftrag generierbar und an mindestens einen Lieferungsdienstanbieter (40₁, 40₂, ..., 40ₙ) übermittelbar ist.

10. System gemäss Anspruch 9, **dadurch gekennzeichnet, dass** die Lieferungsdaten des zweiten Benutzers (20₁, 20₂, ..., 20ₙ) nach Empfang der Empfangsmitteilung durch den zweiten Benutzer (20₁, 20₂, ..., 20ₙ) eingebbar und vom Auftragserfassungsmodul (34) erfassbar sind.

11. System gemäss Anspruch 9, **dadurch gekennzeichnet, dass** die Lieferungsdaten des zweiten Benutzers (20₁, 20₂, ..., 20ₙ) in einer Benutzerdatenbank (32) dem zweiten Benutzer (20₁, 20₂, ..., 20ₙ) zugeordnet speicherbar sind, und dass diese Lieferungsdaten nach Empfang der Empfangsmitteilung durch den zweiten Benutzer (20₁, 20₂, ..., 20ₙ) freigebbar und vom Auftragserfassungsmodul (34) erfassbar sind.

12. System gemäss einem der Ansprüche 9 bis 11, **dadurch gekennzeichnet, dass** die Lieferungsdaten des zweiten Benutzers (20₁, 20₂, ..., 20ₙ) nach der Generierung und Übermittlung des Gegenstands- und/oder Dienstleistungslieferungsauftrags mittels eines Löschmoduls (34) löschbar sind.

13. System gemäss einem der Ansprüche 9 bis 12, **dadurch gekennzeichnet, dass** der mittels des ersten Avatars (11, 12, 13) gewählte virtuelle Gegenstand (17, 18) an eine Gruppe von zweiten Avataren (11, 12, 13) übertragbar ist.

14. System gemäss einem der Ansprüche 9 bis 13, **dadurch gekennzeichnet, dass** die Lieferungsdaten des zweiten Benutzers (20₁, 20₂, ..., 20ₙ) direkt an den Lieferungsdienstanbieter (40₁, 40₂, ..., 40ₙ) übermittelbar sind.

15. System gemäss einem der Ansprüche 9 bis 14, **dadurch gekennzeichnet, dass** zu einem virtuellen Gegenstand (17, 18) zwei oder mehrere Gegenstands- und/oder Dienstleistungslieferungsaufträge generierbar sind.

16. Vorrichtung zur Generierung und Übermittlung von Gegenstands- und/oder Dienstleistungslieferungsaufträgen, wobei mindestens ein Gegenstand im Auftrag von einem ersten Benutzer (20₁, 20₂, ..., 20ₙ) an mindestens einen zweiten Benutzer (20₁, 20₂, ..., 20ₙ) lieferbar ist,
**dadurch gekennzeichnet,**
**dass** ein Umgebungs-Server (31) zur Verfügung gestellt wird, mittels welchem eine virtuelle Umgebung (10) generierbar ist, wobei dem ersten Benutzer (20₁, 20₂, ..., 20ₙ) ein erster Avatar (11, 12, 13) und dem zweiten Benutzer (20₁, 20₂, ..., 20ₙ) ein zweiter Avatar (11, 12, 13) zugeordnet ist, wobei mittels des ersten Avatars (11, 12, 13) mindestens ein virtueller Gegenstand (17, 18) wählbar und an den zweiten Avatar (11, 12, 13) übertragbar ist,
**dass** die Vorrichtung ein Benachrichtigungsmodul (34) umfasst, mittels welchem eine Empfangsmitteilung generierbar und dem zweiten Benutzer (20₁, 20₂, ..., 20ₙ) versendbar ist,
**dass** die Vorrichtung ein Auftragserfassungsmodul (34) umfasst, wobei die Lieferungsdaten des zweiten Benutzers (20₁, 20₂, ..., 20ₙ) an ein Auftragserfassungsmodul (34) versendbar sind, und
**dass** mittels des Auftragserfassungsmoduls (34) ein Gegenstands-und/oder Dienstleistungslieferungsauftrag generierbar und an mindestens einen Lieferungsdienstanbieter (40₁, 40₂, ..., 40ₙ) übermittelbar ist.

17. Vorrichtung gemäss Anspruch 16, **dadurch gekennzeichnet, dass** die Lieferungsdaten des zweiten Benutzers (20₁, 20₂, ..., 20ₙ) vom Auftragserfassungsmodul (34) erfassbar sind.

18. Vorrichtung gemäss Anspruch 16, **dadurch gekennzeichnet, dass** die Vorrichtung eine Benutzerdatenbank (32) umfasst, in welcher die Lieferungsdaten des zweiten Benutzers (20₁, 20₂, ..., 20ₙ) dem zweiten Benutzer (20₁, 20₂, ..., 20ₙ) zugeordnet speicherbar sind.

19. Vorrichtung gemäss einem der Ansprüche 16 bis 18, **dadurch gekennzeichnet, dass** die Vorrichtung ein Löschmodul (34) umfasst, mittels welchem die Lieferungsdaten des zweiten Benutzers (20₁, 20₂, ..., 20ₙ) löschbar sind.
